# EUROPEAN PATENT APPLICATION

(11) **EP 1 085 639 A2**
(43) Date of publication of application: **21.03.2001**
(21) Application number: 00115206.5
(22) Date of filing: 13.07.2000
(51) Int. Cl.: H02J 7/00

(54) **A coupling for connecting a battery to a charging assembly**

(30) Priority: 23.07.1999 SE 9902778
(71) Applicant: UMA Trading AB, 33127 Värnamo (SE)
(72) Inventor: Ragnarsson, Sven-Christer, 334 32 Anderstorp (SE)
(74) Representative: Linde, Leif

(57) **Abstract**

A coupling for connecting a charging assembly with a wet battery at the charging of the wet battery, for example a wet battery for a loading truck, comprises two coupling elements (2, 102) of which one is connected with the battery and the other is connected with the charging assembly. At the charging of the battery the coupling elements are connected with each other for connecting the battery to the charging assembly. The coupling comprises two coding pins (10, 110) positioned in one coupling element each, the coding pins being adapted to cooperate so as to prevent or allow connection of the coupling elements with each other in order to provide that only batteries and coupling assemblies which are suitable for cooperation can be connected with each other. The coupling comprises also a duct (18, 118) for gas or liquid, for example with the object of supplying air to the battery during the charging thereof. The duct (18, 118) for gas or liquid is included in the coding pins (10, 110) of the coupling.

## Description

The present invention relates to a coupling for connecting a charging assembly to a wet battery at the charging of the wet battery, for example a wet battery for a load truck.

A coupling of this kind comprises two coupling elements each connected with the charging assembly and the battery, the coupling elements being connected with each other at the charging of the battery in order to connect the battery with the charging assembly. The coupling elements have coding pins which at the connection of the coupling elements cooperate with each other. The coding pins have the object of providing that only batteries and charging assemblies matching each other preferably with regard to the voltage used at the charging of the battery can be connected with each other. This is provided by the fact that the coupling element of the battery can be connected with the coupling element of the charging assembly only if the coding pins take correct cooperating positions in relation to each other, which positions are dependent of for example a correct voltage between the charging assembly and the battery.

Recently there has between the charging assembly and the battery been connected a duct for a gas and/or a liquid, for example with the object of supplying air to the liquid of the battery during the charging of the battery. The air provides for a certain circulation in the liquid of the battery which in turn provides for a reduced time for the charging of the battery. The duct can also be used for draining off gases from the battery or for supplying a liquid to the battery. In a previously known coupling the coupling elements have for this object been provided with separate ducts which however include substantial drawbacks with regard to construction and manufacturing.

The object of the invention is to provide a coupling of the kind mentioned above which with regard to construction and manufacturing is more advantageous than previously known couplings of said kind.

In order to comply with this object the coupling according to the present invention is characterized in that the duct is incorporated with the coding pins of the coupling.

Said design of the coupling in which the duct is incorporated with the coding pins of the coupling provides for a substantial simplification of the coupling with regard to construction and manufacturing. When the elements of the coupling are connected with each other also the coding pins of the coupling elements are connected with each other which at the same time and without separate measures provides for the establishment of the desired duct to the battery.

In a preferred embodiment of the invention the coding pins comprise one section each of the duct which duct sections are sealingly connected with each other when the coupling elements and thereby the coding pins are connected with each other. It is preferred that the first coding pin has a tubular portion and a portion connected therewith having in cross-section a portion with a substantially half-circular wall, while the other coding pin also has a tubular portion and a portion which in cross-section has a substantially half-circular wall which is complementary to the first coding pin having a portion which is a substantially half-circular wall. The second coding pin has at its portion constituting a substantially half-circular wall a radially inside this portion positioned, second tubular portion which is connected with the first tubular portion of the second coding pin and being adapted at the connection of the coupling elements and thereby the coding pins to each other being sealingly connected with the tubular portion of the first coding pin, It is thereby suitable that the second tubular portion of the second coding pin has outside the half-circular wall of the second coding pin an end portion which is adapted at the connection of the coupling elements and thereby the coding pins to each other to be introduced into the adjacent end portion of the tubular portion of the first coding pin. This design of the coding pins provides that there is without special measures provided a tight continuous duct through the coupling when the coupling elements are connected with each other.

The ends of the coding pins which are not adapted to be connected with each other are designed so as to make it possible to connect hoses, pipes or other ducts to the coding pins, and these ducts are for example connected with a device for supplying air to the established duct and to the liquid of the battery which shall be charged.

An embodiment of the coupling according to the invention shall in the following be described with reference to the accompanying drawings. The coupling comprises two coupling elements in the form of a male portion and a female portion.
Fig. 1a is a perspective view of the male portion of the coupling with the included elements in unassembled position.
Fig. 1b is a perspective view of the male portion shown in Fig. 1a with the elements in assembled position.
Fig. 2a is a perspective view of the female portion of the coupling with the elements in unassembled position.
Fig. 2b is an end view of the female portion shown in Fig. 2a with the elements in an assembled position.
Figs 3 and 4 are perspective views of coding pins according to the invention provided with channels and included in the male portion and the female portion, respectively.

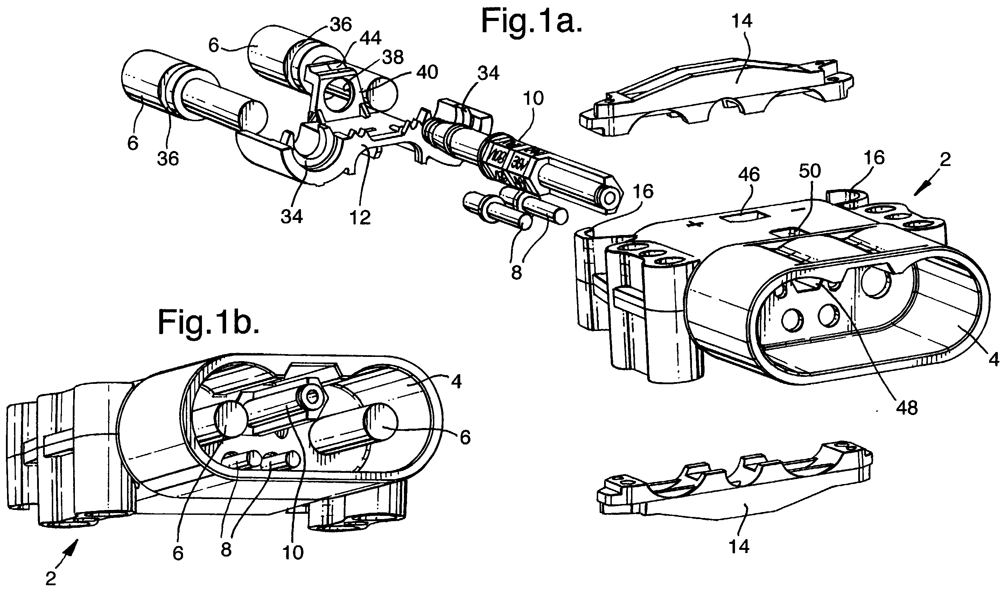

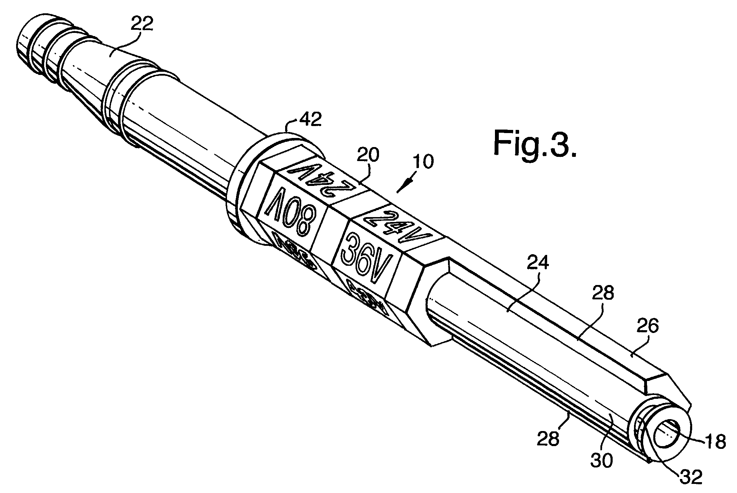

The coupling element shown in Fig. 1a constituting the male portion of the coupling comprises a cover 2 manufactured from plastic material and having a connection element 4. In addition thereto the coupling element shown in Figs 1a and 1b comprises two contact pins 6 and two help contact pins 8. The coupling element designed as a male portion comprises also a so called coding pin 10 shown in a larger scale in Fig. 3. In addition thereto the coupling element comprises a retainer 12 for fixing the contact pins 6, the help contact pins 8 and the coding pin 10 in the cover 2. The coupling element shown in Figs 1a and 1b also comprises a cable clamp consisting of two portions 14 which are connected with each other with the end portions received in the portions 16 of the cover 2 in order to fix the cables connected with the contact pins 6 and the help contact pins 8.

The coding pin 10 which is most clearly shown in Fig. 3 has a through channel 18. The coding pin 10 has a central portion 20 having an externally hexagonal cross-section and end portion 22 for connecting a hose or the like and an end portion 24 which is intended to be connected with a coding pin provided in the female portion of the coupling. The end portion 24 forms a substantially half circular wall 26 in cross-section constituting a direct continuation of the half central portion 20 and forming two axially extending engagements surfaces 28. In addition thereto the end portion 24 has a duct portion 30 so that the channel 18 extends through the hole coding pin 10. The duct portion 30 extends somewhat outside the half circular wall 26 and has here a groove 32 for receiving a sealing ring (not shown).

When mounting the coupling element shown in Fig. 1a the contact pins 6 are connected with the retainer 12 by introducing half circular strips 34 on the retainer 12 into grooves 36 on the contact pins 6. The coding pin 10 is connected with the retainer 12 by introducing the portion 22 of the coding pin into an opening 38 in a fixing portion 40 on the retainer 12 to a position in which a shoulder surface 42 between the portions 20 and 22 of the coding pin 10 engages the fixing portion 40 around the opening 38 therein.

Also the help contact pins 8 are connected with the retainer 12, and thereupon the unit thus established is connected with the cover 2 by introducing the contact pins 6, the coding pin 10 and the help contact pins 8 through the openings at the bottom of the connection portion 4 of the cover 2 to the position shown in Fig. 1b. In this position a projection 44 on the fixing portion 40 engages an opening 46 in the cover 2 so as to fix the position of the retainer 12 and the details supported thereby in the cover 2.

The opening 48 in the cover 2 which is adapted to receive the portion 20 of the coding pin 12 has like this a hexagonal cross-section which means that the coding pin 10 can be arranged in six different positions. In each of these positions there is shown in an opening 50 at the upper side of the cover 2 the voltage at which the coupling shall work. Different figures relating to the voltage are stated at the portion 20 of the coding pin 10 and these figures are visible through the opening 50 dependent on the position of the coding pin 10 in the opening 48.

Finally the portions 14 of the cable clamp is attached which acts for fixing the retainer 12 and the portions supported thereby in the cover 2.

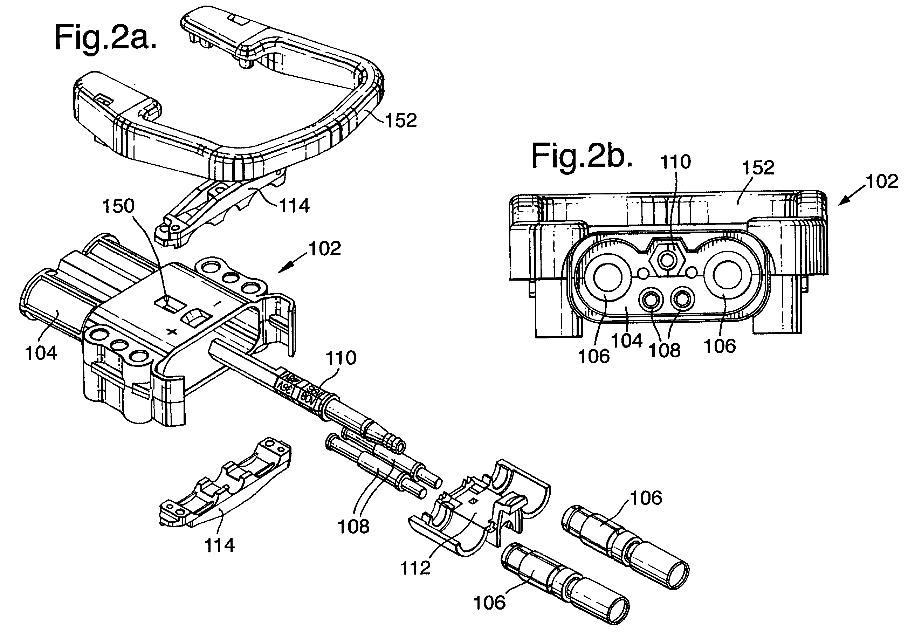

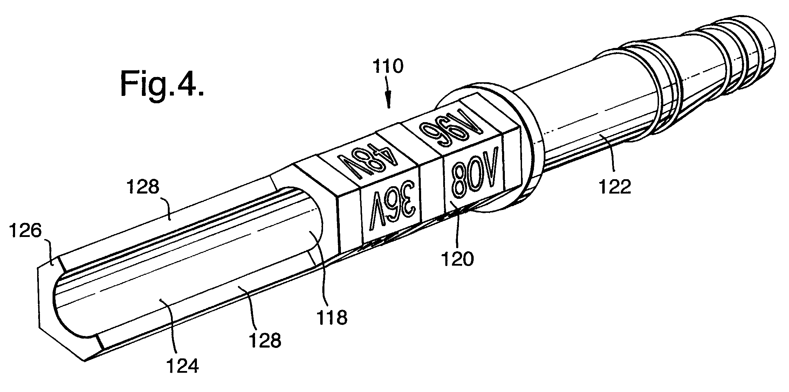

The coupling element shown in Figs 2a and 2b formed as a female portion comprises a cover 102 having a connection portion 104 which is intended to be introduced into the connection portion 4 of the cover 2 when the coupling elements are connected with each other. The coupling portion shown in Fig. 2a comprises two contact sleeves 106, two help contact sleeves 108, a boding pin 110 shown in larger scale in Fig. 4, a retainer 112 of the same design as the retainer 12 at the coupling element according to Fig. 1a and a cable clamp consisting of two portions 114 of the same design as the cable clamp 14 at the coupling element according to Fig. 1a.

Like the coding pin 10 according to Fig. 3 the coding pin 110 has a through channel 118. Also the coding pin 110 has a central in cross-section externally hexagonal portion 120, an end portion 122 for connection to a pipe or a hose and an end portion 124 having in cross-section a substantially half circular wall 126 forming axially extending engagement surfaces 128. The coding pins 10 and 110 are adapted to be connected with each other in order to constitute a continuous duct through the coupling, and it is thereby realized that the coding pins 10 and 110 shall be positionally related so in relation to each other that the cross-sectional half circles 26 and 126 form a circular wall by the fact that the engagement surfaces 28 and 128 contact each other. In this position the duct portion 30 of the coding pin 10 is received in the half circular recess in the half circular wall 126 of the coding pin 110 at the same time as the projection portion 32 of the duct portion 30 extends into the end portion of the channel 118 in the central portion 120 of the coding pin 110 while being sealed against the sealing ring positioned in the groove 32 in the end portion. In the position in which the coding pins 10 and 110 are connected with each other there is established a continuous channel through the unit defined by the coding pins.

The mounting of the coupling element according to Fig. 2a formed as a female portion is conducted in principally the same way as the mounting of the coupling element according to Fig. 1a, i.e. the contact sleeves 106, the help contact sleeves 108 and the coding pins 110 are connected to the retainer 112, whereupon the retainer and the elements supported thereby are introduced into the cover 102, so that the contact sleeves, the help contact sleeves and the coding pins extend through openings formed in the cover 102. Subsequently to the connection of the elements 114 of the cable clamp and a handle 152 the coupling element formed as a female portion has the appearance shown in an end view in Fig. 2b.

It should be noted that the coding pins 110 must be mounted in such a way in the cover 102 that it is at the connection of the coupling elements connected with the coding pin 10 as described above, i.e. so that the substantially half circular walls 26 and 126 of the coding pins complete each other while there is an engagement between the engagement surfaces 28 and 128. Also the coding pin 110 is provided with voltage definitions on the central portion 120, which voltage definitions are visible in the opening 150 in the cover 102. This means that the coding pins complete each other and allows that the coupling elements can be connected with each other, when the same voltage definitions are visible in the openings 50 and 150 in the covers 2 and 102.

In a coupling according to the invention there is provided from the constructional point of view as well as from the utilization point of view in a simple way a channel through the coupling, which channel by connection of hoses or other ducts to the end portions 22 and 122 of the coding pins 10 and 110 can be used for supplying air to the battery which is charged which decreases the charging time because of the circulation provided in the liquid of the battery. The duct can also be used for other purposes, for example for draining gases from the battery or for supplying completing liquid to the battery.

The invention can be modified with the scope of the following claims.

## Claims

1. A coupling for connecting a charging assembly to a wet battery, for example a wet battery for a loading truck, at the charging of the battery, comprising two coupling elements (2, 102) of which one is connected with the battery and the other is connected with the charging assembly and which at the charging of the battery are connected with each other for connecting the battery with the charging assembly, two coding pins (10, 110) positioned in each of the coupling elements, the coding pins being adapted to cooperate so as to prevent or allow connection of the coupling elements with each other in order to allow that only batteries and coupling assemblies which are suitable for cooperation, for example with regard to the voltage, can be connected with each other, and a duct (18, 118) in the coupling for gas or liquid, for example with the object of supplying air to the battery during the charging thereof, **characterized** in that the duct (18, 118) for gas or liquid is included in the coding pins (10, 110) of the coupling.

2. A coupling as claimed in claim 1, **characterized** in that the coding pins (10, 110) include one portion each of the duct which portions at the connection of the coupling elements and thereby the coding pins with each other are connected with each other in a sealing condition.

3. A coupling as claimed in claim 2, **characterized** in that the first coding pin (110) has a tubular portion and a portion connected therewith and formed as a half circular wall (126) in cross-section and that the other coding pin (10) also has a tubular portion and a portion connected therewith having a substantially half circular wall (26) in cross-section, said portions of the coding pins completing each other and that the second coding pin (10) at its portion formed with a substantially half circular wall (26) has a radially inside this portion positioned, second tubular portion (30) connected with the first tubular portion of the second coding pin and adapted at the connection of the coupling elements with each other and thereby the coding pins with each other to be sealingly connected with the tubular portion of the first coding pin.

4. A coupling as claimed in claim 3, **characterized** in that the second tubular portion (30) of the second coding pin has outside the portion formed with a substantially half circular wall (26) an end portion which at the connection of the coupling elements and thereby the coding pins with each other is adapted to be introduced into the adjacent end portion of the tubular portion of the first coding pin.

5. A coupling as claimed in claim 4, **characterized** in that the end portion of the tubular portion (30) of the second coding pin is provided with a peripherally extending groove (32) having a sealing ring positioned therein for providing a sealing action between the second tubular portion of the second coding pin and the tubular portion of the first coding pin.

6. A coupling as claimed any of claims 2-5, **characterized** in that the ends of the coding pins which are adapted not to be connected with each other are designed so as to make it possible to connect hoses, pipes or other ducts to the coding pins.

7. A coupling as claimed in any of the preceding claims, **characterized** in that the coding pins (10, 110) are positioned in one channel each in two connectable coverings (2, 102) belonging to one coupling element each and that the coding pins (10, 110) are fixed in its respective channel by means of one retainer (12, 112) each fixed in its covering, the retainers fixing in its covering contact pins, contact sleeves and help contact pins and help contact sleeves in the coupling, if any.
